# EUROPEAN PATENT APPLICATION

(11) **EP 1 422 698 A2**
(43) Date of publication of application: **26.05.2004**
(21) Application number: 03257404.8
(22) Date of filing: 24.11.2003
(51) Int. Cl.: G11B 7/0065

(54) **Methods for page-wise recording and reading of a holographic ROM medium**

(30) Priority: 22.11.2002 US 429012 P; 08.09.2003 US 658055
(71) Applicant: InPhase Technologies, Inc., Longmont, CO 80501 (US)
(72) Inventor: Curtis, Kevin R., Longmont, Colorado 80503 (US); Anderson, Kenneth E., Boulder, Colorado 80302 (US)
(74) Representative: Smith, Samuel Leonard

(57) **Abstract**

According to one aspect, methods and systems for recording and reading holographic storage media are provided. In one aspect, a method includes illuminating a data mask (200) with a beam and recording a resulting modulated beam in a holographic storage medium (220), wherein the data mask includes an information layer that is divided into multiple data pages, and propagating a reference beam to the holographic storage medium to record the multiple data pages of the data mask in a parallel fashion on the holographic storage medium.

## Description

### CROSS-REFERENCE TO RELATED APPLICATIONS

The present application claims benefit of earlier filed provisional application U.S. Serial No. 60/429,012, entitled "A METHOD FOR IMPLEMENTING A PAGE BASED HOLOGRAPHIC ROM," filed on November 22, 2002, which is incorporated herein in its entirety by reference.

### BACKGROUND

### 1. Field of the Invention:

The invention relates generally to holographic data storage media and systems, and more particularly to methods and systems for recording'and reading page based holographic ROM storage media.

### 2. Description of the Related Art:

Holographic data storage systems store information or data based on the concept of a signal beam interfering with a reference beam at a holographic storage medium. The interference of the signal beam and the reference beam creates a holographic representation, i.e., a hologram, of data elements as a pattern of varying refractive index and/or absorption imprinted in a volume of a storage or recording medium such as a photopolymer or photorefractive crystal. Combining a data-encoded signal beam, referred to as an object beam, with a reference beam can create the interference pattern at the storage medium. A spatial light modulator (SLM) or lithographic data mask, for example, may create the data-encoded signal beam. The interference pattern induces material alterations in the storage medium that generate the hologram. The formation of the hologram in the storage medium is generally a function of the relative amplitudes and polarization states of, and phase differences between, the signal beam and the reference beam. The hologram is also dependent on the wavelengths and angles at which the signal beam and the reference beam are projected into the storage medium. After a hologram is created in the storage medium, projecting the reference beam into the storage medium interacts and reconstructs the original data-encoded signal beam. The reconstructed signal beam may be detected by using a detector, such as a CMOS photo-detector array or the like. The recovered data may then be decoded by the photo-detector array into the original encoded data.

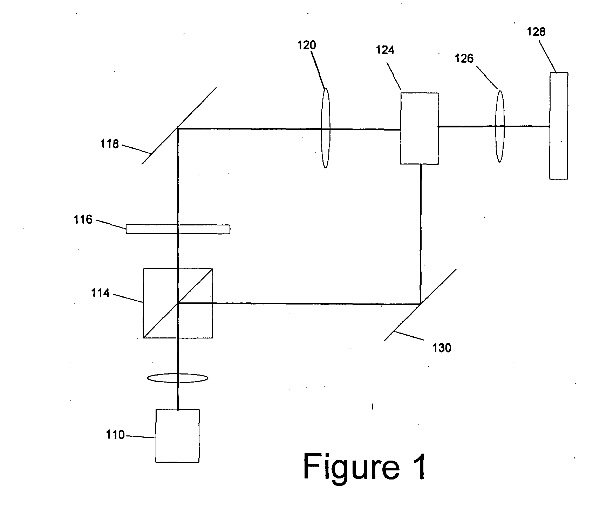

A basic holographic system is illustrated in **Figure 1**. The holographic storage system includes a light source 110, for example, a laser for providing a coherent beam of light. A beam splitter 114 is positioned to split the laser beam into an object beam and a reference beam. The object beam is directed to an SLM or data mask 116 where it is encoded with information as a two-dimensional image and directed to the recording storage medium 124 by mirror 118 and lens 120 where it interferes with the reference beam directed via mirror 130. A complex interference pattern is recorded in the storage medium 124 where the object beam and reference beam interact. After a first image or layer is recorded, the system may be modified to enable additional images to be recorded in storage medium 124. For example, by modifying the angle and/or wavelength of the reference beam, successive images may be recorded in the storage medium 124.

A particular image may be retrieved from recording medium 124 with a reference beam similar to the original reference beam used to store the image. The light is diffracted by storage medium 124 according to the stored hologram and the two-dimensional image that was stored in recording medium 124 is directed by lens 126 to photo-detector array 128.

Holographic Read Only Memory (Holographic ROM or HROM) storage media are well known. In the past, holographic information has been recorded in disc format HROM in an incremental manner by successively aligning different locations on the HROM with an object beam and a reference beam to record successive data bits. Different information can be recorded at each successive location by changing the information imparted through a spatial light modulator (SLM) or successive data masks, for example. U.S. Patent No. 6,272,095, entitled, "Apparatus and Method for Storing and/or Reading Data on an Optical Disk," by Liu et al. describes several examples of illustrative prior recording techniques, and is incorporated herein by reference in its entirety. Moreover, multiple holograms can be stacked in virtual image layers through wavelength multiplex, angle multiplex, shift multiplex, confocal multiplex, or other multiplex techniques, for example. Each hologram in a stack may comprise a page of information, where a "page" is a collection of bits or of pixel data stored together, e.g., as a 2048 x 2048 array or a 10 x 10 array. U.S. Patent No. 6,322,933, entitled, "Volume Track Definition for Data Storage Media Used to Record Data by Selective Alteration of a Format Hologram," by Daiber et al. describes several examples of illustrative prior volume recording techniques, and is incorporated herein by reference in its entirety. Additionally, another reference that describes recording techniques and the bitwise retrieval of an HROM includes "Holographic ROM System for High Speed Replication," presented by Ernest Chuang et al. of Sony Corporation at the Optical Data Storage Conference, July 8, 2002, in Hawaii, USA.

One shortcoming of such methods for the recording of holograms is that significant time can be required to incrementally record information on a location-by-location or bit-by-bit basis. Therefore, improved recording processes have been proposed in which an entire holographic image or "layer" of information is recorded simultaneously across an entire storage medium. An exemplary method includes shining a planewave beam through a transmissive optical medium, e.g., a transmissive lithographic data mask, encoded with information so as to create a planewave object/signal beam. The encoded planewave object beam illuminates one surface of the storage medium. A conical planewave reference beam, for example, may illuminate an opposite surface of the holographic storage medium. The object beam and the reference beam interfere within the holographic storage medium to create an information layer within the storage medium.

Readout of the data stored on the media may be subsequently achieved using the same reference beam used to record the data or by using a conjugate readout beam (i.e., similar to the original reference beam propagated in the opposite direction) to reconstruct a backwards-propagating signal beam that retraces the path of the original recording. The stored information is readout in a bitwise fashion, e.g., a bit at a time or a few bits at a time in a serial fashion as described in the Sony Corporation approach referenced above. A pickup lens of a system may focus a real image of the data, created using the readout beam, onto a suitable detector as the holographic medium and/or the drive translate and/or rotate with respect to each other.

One shortcoming of the recording methods described above is that information typically is readout a bit at a time or a few bits at a time in a serial fashion. Thus, there is a need for recording holographic storage media that more readily permits relatively higher, parallel readout rates. Specifically, there is a need for parallel readout of at least a page of information at a time, e.g., many bits in parallel. In addition, the bit-by-bit readout architecture generally limits the implementation to spinning disks in order to get reasonable transfer rates. There is a need for page-wise readout that may allow for new more compact, portable formats such as storage cards to be practical. Another shortcoming of the prior proposed recording methods includes the alignment and time necessary to align and record multiple data masks in holographic storage media, e.g., HROM media.

### BRIEF SUMMARY

In one aspect of the present invention, methods for recording holographic storage media are provided. In one example of this aspect of the invention, a method includes illuminating a data mask with a beam and recording the resulting modulated beam in a holographic storage medium, wherein the data mask includes an information layer that is divided into multiple data pages, and propagating a reference beam to the holographic storage medium to record the multiple data pages of the information layer in a parallel fashion on the holographic storage medium.

In another aspect of the present invention, methods for recording holographic media and/or holographic master data masks are provided. In one example of this aspect of the invention a method includes storing at least one information layer in a holographic master data mask, illuminating the holographic master data mask to reconstruct the stored information layer and store the information layer in a holographic storage medium with an object beam, and propagating a reference beam to the holographic storage medium to record the information layer therein.

In another aspect of the present invention, a data mask for storing information in a holographic medium is provided. In one example, the data mask includes an information layer adapted to be relayed into a holographic medium, wherein the information layer is divided into a plurality of data pages.

In another aspect of the present invention, various methods for reading holographic media are provided. In one example, a method for reading holographic storage media includes providing a reference beam and detecting stored information in a holographic storage medium with a detector placed at a distance from the holographic storage medium, wherein the holographic storage medium includes at least one information layer divided into a plurality of data pages stored therein and adapted to be detected at the distance of the detector.

In another aspect of the present invention, methods for confocally recording information into holographic storage media are provided. In one example, the method includes confocally multiplexing a plurality of data masks in a holographic storage medium at two or more different distances from the center of the holographic storage medium, wherein at least one of the data masks includes an information layer divided into a plurality of data pages.

The present invention is better understood upon consideration of the detailed description below in conjunction with the accompanying drawings and claims.

### BRIEF DESCRIPTION OF THE DRAWINGS

**Figure 1** illustrates an exemplary holographic recording and reading system;
**Figure 2A** illustrates an exemplary data mask including multiple data pages;
**Figure 2B** illustrates an exemplary stack of information layers having multiple data pages in each layer;
**Figure 3** illustrates an exemplary holographic data recording system for creating holographic master data masks or holographic media;
**Figure 4** illustrates an exemplary system for detecting holographic data directly with a detector;
**Figures 5A and 5B** illustrate an exemplary system for recording a master holographic data mask;
**Figure 6** illustrates an exemplary system for imaging a master holographic data mask to holographic storage media;
**Figure 7** illustrates an exemplary system for reading holographic storage media including a holographic optical element;
**Figure 8** illustrates an exemplary system and method for reading images from holographic storage media; and
**Figures 9A and 9B** illustrate exemplary systems and methods for recording and reading holographic storage media.

### DETAILED DESCRIPTION OF SEVERAL EMBODIMENTS

Methods and systems are provided for page based holographic storage media recording and reading, e.g., holographic read only media or HROM media. The following description is presented to enable any person of ordinary skill in the art to make and use the invention. Descriptions of specific techniques and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described and shown, but is to be accorded the widest scope consistent with the principles and features disclosed herein.

In one aspect of the present invention, data masks are used to record virtual layers or holographic images having a plurality of data pages centered at different locations on a holographic storage medium such that readout may be achieved in a page-wise fashion. In one example, parallel recording of multiple data pages in each layer allows for the fast replication of HROM media with increased storage capacity, and page-wise readout of HROM media allows for faster read rates than bitwise readout. The increased storage capacity is due in part to increased diffraction efficiency by recording multiple data pages in the storage media in parallel. The data transfer rates are increased in part because of parallel detection of an entire data page without moving the media as in serial storage devices such as CDs, magnetic disks, and the like. The examples are particularly suited for making high performance card storage devices; however, the examples are applicable to various storage device media and configurations such as discs and tape media as will be appreciated by those of ordinary skill in the art.

In another aspect of the present invention, one or more data masks are stored in a holographic medium to create a holographic master data mask for use in recording holographic storage media. In one example, a holographic master data mask may be fabricated and used to store one or more data layers in a holographic storage media such as HROM media. The holographic master data mask may be multiplexed to retrieve the various data masks with improved alignment and speed between recording different layers without the need to move and align various data masks. Additionally, the holographic master data mask may be placed at or near a quasi Fourier transform plane of the stored data masks using a VanderLugt setup or other transforming optical system. Holographic master data masks may be recorded at or near Fourier planes or image planes of the optical system. The Fourier transform location in these systems may filter out high order transform components during recording the holographic master data mask, and reduce interference between stored data pages when recording an HROM or the like, thereby improving readout performance.

In another aspect of the present invention, each storage layer of a holographic storage medium is stored at the same distance d from the center of the master medium, where d is located outside of the holographic storage medium. A detector may be advantageously placed at the image plane of the stored information, e.g., one or more data pages, such that the information may be readout directly, without the use of additional optics such as a lens or the like. Such a feature may allow for more compact and simple read drive systems.

In another aspect of the invention, where one or more data mask are stored in a holographic medium or a holographic master data mask, the data pages are multiplexed in stacks using multiplexing techniques such as wavelength or angle multiplexing. Additionally, the data pages may be stored spatially overlapping using polytopic multiplexing. Polytopic multiplexing is described, e.g., in U.S. Patent Application 60/453,529, filed on March 10, 2003, and entitled, "A METHOD FOR OVERLAPPING HOLOGRAMS USING LOCATION BASED FILTERING TO SEPARATE OUT THE SIGNAL," which is hereby incorporated by reference as if fully set forth herein.

The following description includes various examples and aspects of the present invention. As will be recognized by those of ordinary skill in the art various examples may be used alone or in combination with various methods and systems depending on the particular application.

Volume holography can be used to multiplex multiple layers in the same holographic storage medium. For instance, a first transmissive mask medium or data mask may be encoded with a first information layer, and a second transmissive mask medium may be encoded with a second information layer. Information from the first and second transmissive mask media can be multiplexed onto the holographic storage medium through angle or wavelength multiplex techniques, for example. In this manner, multiple transmissive mask media, each encoded with different information, can be used to produce multiple information layers. That is, stacks of holograms can be created in which information stored at different layers in a given stack are created by different or successive transmissive mask media. The use of the term "layer," in a stack is a logical explanation or term as the physical reality of volume holographic recording is that all holograms in a stack exist in the same or nearly the same volume and not in physically separate layers in the media.

In one exemplary recording method, multiple data pages included in a single hologram image or information layer are recorded in parallel in at least a portion of a holographic storage medium. Further, multiple layers may be recorded to the holographic storage medium to create stacks of data pages.

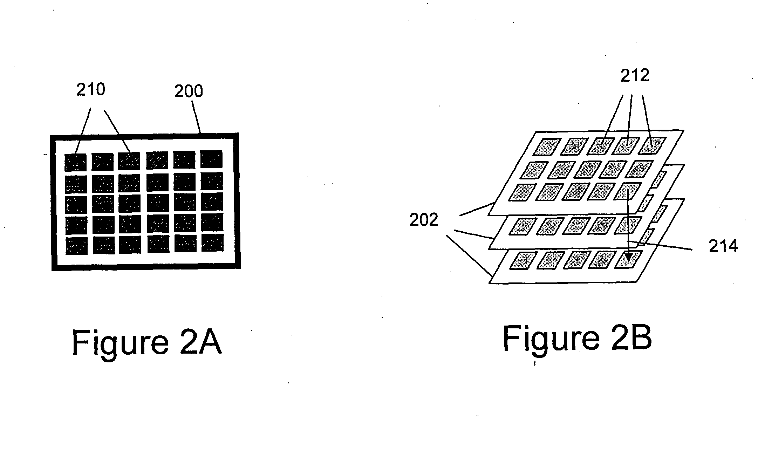

**Figure 2A** illustrates an exemplary data mask 200 including a plurality of data pages 210. Each data page 210 may include an array of pixels numbering in the hundreds of pixels or more. For example, each data page 210 may include a 2048 by 2048 array of pixels, but various sizes and shapes of each data page 210 are possible. Each data page may be separated within data mask 200 and storage media by a distance equal to a few microns or larger. Alternatively, if polytopic multiplexing is used, for example, the data pages may overlap within the storage media as described in greater detail below.

**Figure 2B** illustrates an exemplary representation of hologram images or virtual information layers 202 having multiple data pages 212 of information that may be stored in a holographic storage medium by data mask 200. Each layer 202 may be stored onto a portion or all of a holographic medium at the same time such that multiple data page 212 of a common layer are recorded in parallel. Further, multiple layers 202 may be aligned with data pages 212 forming a stack 214 of data pages 212, where one stack 214 is indicated generally by the arrow. During readout, a detector may be aligned with a stack 214 of one or more data pages 212 in a storage medium and each data page 212 detected or readout successively in a page-wise fashion. For example, each layer 202 and data page 212 of a stack 214 may be multiplexed into the media by angle, wavelength, or other suitable methods and readout accordingly. When an entire stack 214 has been read, the detector and/or media may be translated and/or rotated to align the detector with another stack 214 and page-wise readout continued. In another example described below, referred to as polytopic multiplexing, data pages 210 may spatially overlap when stored.

Storing an information layer 202 including multiple data pages 212, across a holographic storage medium may more effectively utilize the dynamic range of holographic media, thereby increasing the storage capacity of the media. Generally, the storage capacity and diffraction efficiency decrease as the number of holograms, in this instance, information layers 202, are stored in similar locations of the volume medium. For example, diffraction efficiency is proportional to 1/m², where m is the number of holograms stored therein. When multiple data pages are recorded in a medium in parallel as part of a single image, however, the diffraction efficiency reduction occurs only once for each layer 202 of multiple data pages 212, i.e., m=1, rather than a reduction for each data page 212 recorded within the holographic storage medium. Typically, recording all data pages 212 in layer 202 in parallel results in or allows for higher storage density due to improved uniformity of exposure of the medium and better use of the medium volume. In contrast, if each data page 212 is recorded by itself in a serial fashion, the process will use more dynamic range of the medium than when each data page 212 is recorded at the same time, i.e., in parallel. The difference in dynamic range is due, at least in part, to overlap of the signal beam and reference beam exposing more medium with propagation through the medium. This results in more effective exposures to record the same information during serial recording and uses a greater dynamic range of the medium than parallel recording. In addition, localized serial recording of data pages 212 may create localized bulk index changes that can lower the signal-to-noise ratio (SNR) of the system compared to parallel recording an entire layer 202.

Additionally, faster readout times may be achieved with the exemplary methods. During readout of a holographic storage medium with multiple data pages 212 in each layer 202, a system may align a detector with a data page 212 or a stack 214 of data pages 212 and readout the data pages 212 in a page-wise fashion, e.g., where the array of information stored in each data page 212 is readout in parallel. In one example, a detector is aligned with a stack 214 and the entire stack 214 of data pages 214 is readout page-wise (through multiplexing, etc.). The detector may then move to another stack 214 of the storage medium to readout data pages 212. Reading in a page-wise fashion may substantially increase the readout rate compared to methods and systems where readout is performed in a serial or bitwise fashion.

Further, detecting an entire data page 212 in parallel allows for page-wise error correction methods. For example, detecting an image of a data page 212 allows for various error correction and channel modulation techniques to recover detected signals and decode them into the storage information with greater accuracy. For example, U.S. Patent Application No. 10/305,769 entitled "MICRO-POSITIONING MOVEMENT OF HOLOGRAPHIC DATA STORAGE SYSTEM COMPONENTS," describes several error correction methods and techniques and is hereby incorporated by reference in its entirety.

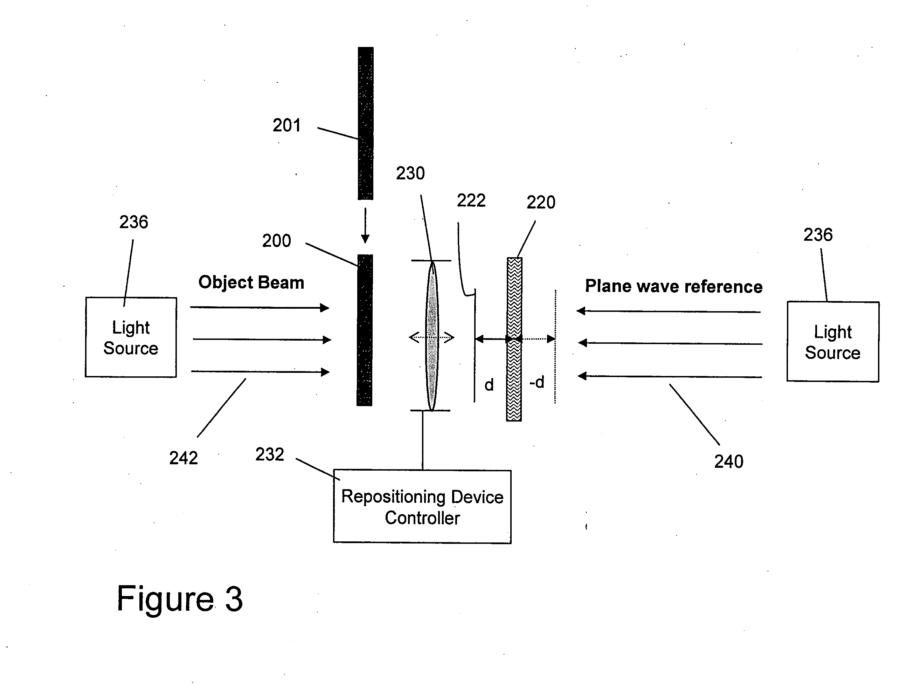

**Figure 3** illustrates a portion of an exemplary system for recording data mask 200 including multiple data pages onto holographic storage medium 220 where the multiple data pages are advantageously recorded in parallel. The exemplary systems shown and described herein may include various additional or different optical elements such as lenses, prisms, apertures, filters, beam splitters, gratings, and the like as will be recognized by those of ordinary skill in the art. For clarity, however, such additional features have been omitted from the description.

In this example, data mask 200 is illuminated by an object beam 242 provided by light source 236 and interacts with a reference beam 240 provided by light source 236. Light source 236 may include any suitable light source such as a laser or other coherent light source. Further, object beam 242 and reference beam 240 may be provided by the same or different light sources. The exemplary recording method is shown in a reflection geometry holography process configuration (object and reference beam entering the media from opposite sides), where the plane wave reference beam interferes with the data encoded object beam inside the holographic storage medium 220. The system illustrated may be configured in various manners and include various other features not explicitly described herein as will be recognized by those of ordinary skill in the art. For example, it should be readily recognized that transmission geometry holography processes may also be used to store the information of data mask 200, where the plane reference wave beam is provided from the same side of the medium 220 as the data mask 200. Additionally, the optical system in the object beam path may include a single lens 230 as shown, no lenses, or a plurality of lenses.

In this example, data mask 200 is illuminated by object wave 242 from light source 236 and is propagated in a transmissive system to image plane 222 that is a distance "d" from the holographic storage medium 220 center. The distance d can be positive, zero, or negative, i.e., on the other side of storage medium 220 shown in dotted lines. Image plane 222 may also be located within storage medium 220. One potential advantage of holographically implementing multiple layers (image planes) is that the layers do not have to physically be on the storage medium. For example, with current multilevel CD, near-field, or high na systems, the layers are on or inside the media. By imaging or placing the data mask 200 of the data, the layers can appear to a detector or drive as being located outside of the storage medium 220, inside storage medium 220, or on storage medium 220 depending on where the data mask 200 image plane 222 lies during recording. Thus, the usual problem of compensating for spherical aberration due to the change in the amount of substrate that the light travels through may not be necessary and in some instances may be detected without a pickup lens or lenses. In addition, by placing the image plane 222 of the data outside of the storage medium 220, various media defects or contamination issues such as dust, scratches, and the like may be mitigated.

Further, when imaging, a lens system 230 can change the magnification of the mask both positive (enlarge) or negative (shrink). In one example, lens 230 demagnifies the image by ten. Lens system 230 may include one or more optical elements including lenses, lens arrays, prisms, beam splitters, and the like. Further, data masks may be recorded without lenses by placing the data masks 200 near to the media, for example, at a distance d from medium 220 and recording at this location.

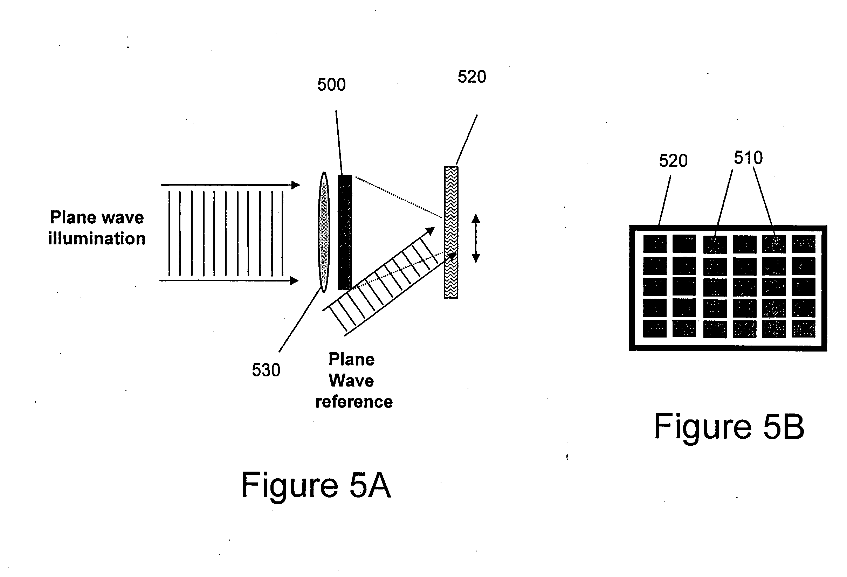

Data mask 200 may be propagated to a holographic storage medium in any suitable manner. In the case of multiple data masks 200, successive data masks 200 and 201 may be stored in the holographic storage media utilizing a procedure in which each data mask 200, 201, and so on, is effectively multiplexed for readout purposes. In one example for recording multiple pages of data mask 200 in parallel, data mask 200 is Fourier transformed onto the medium 220 with a lens array including a lens element for each data page 210. Methods for recording multiple data pages of data mask 200 in parallel may further include a VanderLugt imaging system. For example, a VanderLugt imaging system generally includes or is characterized by having lens 230 before the data mask 200 such that the data mask 200 is illuminated by a converging beam. **Figure 5A**, described below, includes an exemplary VanderLugt imaging configuration. The VanderLugt system is preferred in that it allows the storage medium 220 to be in or near the Fourier transform plane, and when used, e.g., with phase conjugate readout the image plane is generated without the need of a lens. Storage medium 220 may also be placed near the Fourier transform plane to enable an aperture to filter out high order transform components during recording. Further, the Fourier transform plane may be contained within the media, or near the media depending on the particular application. If the Fourier transform plane is within the media, the Fourier plane filtering may be done at another Fourier plane in the relay system. In addition, phase masks or other elements to lower the DC spot energy relative to the rest of the orders intensity may be included to allow for better recording of the information.

In one exemplary method of wavelength multiplexing, the wavelength of the beams 240, 242 may be changed and a new data mask 201 with data pages that have different information stored. Additionally, a holographic master data mask having one or more layers may be used (as will be described below). In one example, a tunable laser device may be included, for example, where the wavelength may be varied by tuning the temperature of a diode as described in U.S. Patent Application No. 10/346,399, entitled, "System and Method for Bitwise Readout Holographic ROM," which is hereby incorporated by reference as if fully set forth herein. Additionally, a series of discrete laser sources with varying wavelengths may be used. Other methods for implementing various wavelengths in a system include techniques developed for telecom applications. For example, these include electroabsorptive modulation and the use of a micro-electro-mechanical systems (MEMs) structure on a laser cavity to change the wavelength. Central wavelengths of interest can be anywhere between 350 - 950nm, and practical tuning ranges of interest can be as small as 1nm. A preferred range of tenability is between approximately 5nm and 15nm. The readout laser may include a continuous wave or pulsed beam. A pulsed beam is generally more efficient in using energy. Angle multiplexing may also be achieved by varying the angle of incidence of the reference beam. Additionally, phase code, polytopic, shift, correlation, or other known multiplexing methods may also be used alone or in combination.

In another example, confocal multiplexing may be implemented by varying the image plane 222 distance d between recording successive data masks 200 and 201. Distance d may be varied through a repositioning device controller 232 that translates lens 230 in a direction perpendicular to data mask 200, along the optical axis of lens 230 to vary the location of d between successive layers. The repositioning device may include any suitable device capable of translating lens 230 (or multiple lenses) and controlled by a suitable microprocessor. This could also be implemented by moving the mask between successive layers. On readout, the detector may be similarly varied by a repositioning device to image and detect the stored images. For example, changing the wavelength for wavelength multiplexing or changing the location of the detector for confocal multiplexing. Additionally, for confocal multiplexing it is generally desirable to have a filter such as an array of pinholes at the image plane, i.e., on the detector array or at an intermediate image plane, to filter out noise from the other confocally stored holograms. These, and other multiplexing techniques well known in the art, can be implemented alone or in any combination to achieve high-density storage and capacity within storage medium 220.

An advantage of confocal multiplexing includes that the data mask 200 may be moved over a distance, e.g., 100 microns or more, without significant loss of image quality and without magnification change, provided that the optical system is close to telecentric. By filtering out other data pages on a per pixel basis with a pinhole filter similar to confocal microscope, the multiple pages in the stack can be recorded at different depths. This can significantly increase the density that may be stored in the holographic medium 220. Confocal multiplexing may also be combined with Bragg based, e.g., angle, wavelength, shift, and/or momentum based multiplexing techniques, e.g., fractal, aperture, peristrophic, to increase storage density.

Data mask 200 may include a phase mask, amplitude mask, or any combination of amplitude and phase mask, where phase and/or amplitude represents data. For example, binary information can be stored as (1,0) or (1,-1,0), and detected as 1,0 on any suitable detector such as a CCD image sensor, CMOS image sensor, or other suitable sensor such as an area array sensor. Data mask 200 may contain information similar to that found on conventional DVD disks, including light and dark spots corresponding to 1s and 0s, data tracks, and servo patterns in the data.

Data mask 200 may be fabricated through any suitable lithographic method as known in the art. Alternatively, an SLM or holographic storage medium may be used to encode an object beam. In one example, one or more data masks 200 having a layer with multiple pages may be holographically stored in a holographic medium as a holographic master data mask and used to store data into the holographic storage medium, e.g., an HROM. The holographically stored layer may be imaged to the HROM, and in the case of multiple pages, multiplexed to the HROM to store each hologram having multiple pages as will be described in greater detail below.

In one example, the holographic storage media 220 may include a card medium such as a high performance card storage device or the like. Alternatively, the storage medium 220 may include disc media similar to or different from conventional CD or DVD media, tape, or any other convenient format in which optical media may be fabricated. Generally, the holographic storage medium 220 includes a photopolymer on or between protective substrates. The protective substrates are advantageously selected from glass, sapphire, polycarbonate, poly(methyl methacrylate) or PMMA, plastic, quartz, or other suitable material that is generally transparent to the wavelength of light being used, and which has adequate mechanical properties in the holographic storage system. Alternatively, the storage medium may be enclosed at least partially within a cartridge or other protective structure.

The photopolymer layer may include a photopolymer material that is capable of recording the desired interference pattern. One exemplary holographic medium includes Tapestry™ media manufactured by InPhase Technologies, but any volumetric media capable of recording holograms may be used. Other examples of photopolymers and storage media include those described in U.S. Patent No. 6,482,551, which is hereby incorporated herein in its entirety by reference. It is also desirable that the optical quality of the media be fairly high, e.g., <4 wavelength of power per cm², to achieve good image reconstruction and good Bragg selectivity. U.S. Patent No. 5,932,045 describes an exemplary method for fabricating exemplary media and is incorporated herein in its entirety by reference.

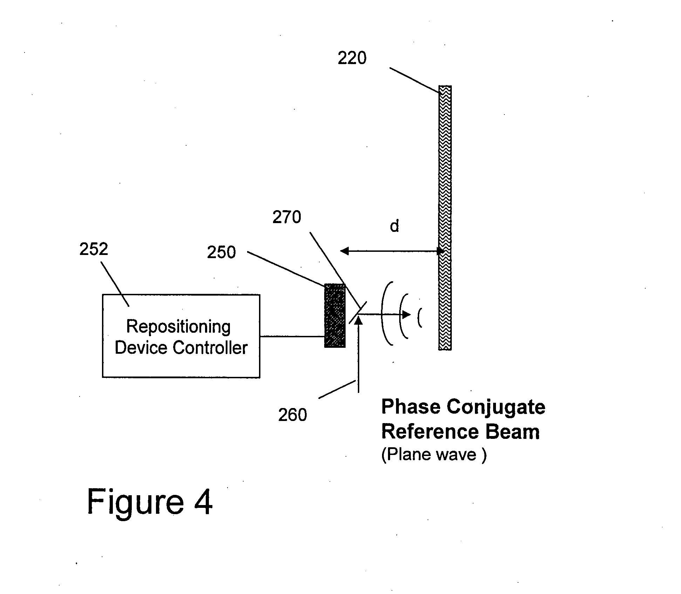

**Figure 4** illustrates an exemplary system for reading holographic storage media, for example, storage medium 220 recorded using the system of **Figure 3**. Readout of data stored in storage medium 220 may be achieved in many different ways. For example, a phase conjugate reference beam can be used with a reference wave the size of a single page or stack of holograms (for a plane wave reference beam this may include a plane wave in the opposite direction). A reference beam 260 may be introduced and deflected to the media by a beamsplitter 270. Beamsplitter 270 may include a standard beamsplitter, a polarizing beamsplitter, or a holographic optical element that redirects the reference beam 260 to storage medium 220. The use of an aperture or angle filter (to just pass the zeroth order or some fraction of the zeroth order) between beamsplitter 270 and storage medium 220 may be used to get an appropriate sized beam and filter out the other data pages. Such a filter or aperture could also be part of the media structure itself.

In one example, where the image was stored outside the storage medium 220 at distance d, a suitable detector 250 can be placed at the image plane distance and the data page detected without the need for an optical lens or other optical elements. Repositioning device controller 252 may be used to vary the distance between detector 250 and storage medium 220 through a suitable repositioning device to read different data pages stored at different distances d in the stack by translating detector 250. Alternatively or additionally, repositioning device controller may also translate the position of storage medium 220 through a suitable repositioning device.

Further, detector 250 and storage medium 220 are capable of moving parallel to each other to align detector 250 with other data pages and stacks of storage medium 220. For example, the other stacks of holograms may be accessed by moving detector 250 and the reference beam illumination to the stack that is desired. Conversely, the media could be moved to the stack location or a combination of head and media movement as in Compact Disk (CD) or Digital Versatile /Video Disk (DVD) systems.

The cost and/or compactness of the exemplary system, for example, a read drive without a pick-up lens or the like, may be greatly improved in this manner. It should be understood that the exemplary system depicted may include various other devices and elements including optics such as a lens or the like. For example, various lenses, apertures, filters, gratings, and the like may be used to image data pages to the detector as are known in the art.

In one example, detector 250 includes the same number of pixels as a single data page stored in storage medium 220. Detector 250 may include an appropriate pixel size depending in part on the data mask pixel size used to store the data page and the optical system magnification, if any. In other examples, the detector 250 may include more pixels of a smaller size than the stored image allowing detector 250 to over sample the stored image. Detector 250 may include any suitable detector such as a CMOS image sensor, a CCD image sensor, or the like that are sensitive to optical information. Further, a decoding unit coupled to detector 250 may determine the corresponding values of the recovered data.

In various examples, a detector may also include a line detector CCD or CMOS line sensor. A line detector can be scanned (physically moved across the image) to readout an entire data page, which could be the size of the storage medium or any faction of the storage medium. The data pages could be multiplexed and readout in a page wise fashion and detected with a line camera. The data pages can also be detected in a similar fashion with a CMOS or CCD camera or other such camera that contains an array of pixels to detect the reconstructed data page.

The holograms in a stack, i.e., data pages multiplexed at the same location of storage medium 220, can all be readout by changing the reference beam in the manner used to store them. For example, changing the wavelength for wavelength multiplexing or changing the location of the detector for confocal multiplexing. Additionally, for confocal multiplexing it is desirable to have a filter such as an array of pinholes at the image plane, i.e. on the detector array or at an intermediate image plane, to filter out noise from the other confocally stored holograms. In an example where a lens or other optical elements are used during readout, the filter may be at an intermediate image plane location before the detector.

In another example for reading holographic storage media, e.g., HROM media, various data pages may be readout without using the phase conjugate readout. This can be done with and without lenses in the drive as well. For example, with reference again to **Figure 3**, if a hologram or layer is stored at a distance -d (image on the opposite side of storage medium 220 shown in dotted lines) then the same reference beam shown in **Figure 3** may be used to readout the layers of data. The holograms will appear as images a distance -d from the media (other side of media). Thus the detector can be place at location -d. Various optical elements including pick-up lenses may also be used to image or transform as desired and is well understood by those of ordinary skill in the art.

Various examples herein may include multiplexing multiple pages to get to high storage density in a holographic storage media or holographic master data mask. For example, wavelength, angle, confocal (storing at different distances from center of media), peristrophic, polytopic, and the like. Further, one or more of the multiplexing technique may be combined to increase storage density, e.g., (wavelength, confocal), (angle, confocal), (wavelength, polytopic) or all three. Additionally, data page(s) and layer(s) may be combined with visible image(s) for security purposes and the like.

Other exemplary holographic data storage systems that may be used in conjunction with various aspects of the present invention include those described in U.S. Patent Nos. 5,920,536 entitled, "Method and Apparatus for Holographic Data Storage System," 5,719,691, entitled, "Phase Correlation Multiplex Holography," and 6,191,875 entitled, "Process for Holography Using Reference Beam Having Correlated Phase Content," all of which are incorporated herein by reference in their entirety.

In another aspect of the present invention, one or more data masks are recorded in a holographic master data mask. The holographic master data mask may then be used to record multiple holographic layers in a holographic storage media, such as HROM storage media or the like. For example, the holographic master data mask may be used to holographically record an entire information layer across a holographic storage medium. Each layer may be divided into multiple data pages of information to be recorded in parallel. Multiple layers may be multiplexed onto a medium using wavelength, angle, peristropic, confocal, polytopic, phase-code, or other multiplex techniques. In producing the holographic master data mask, data pages and stacks of data pages can be carefully aligned and recorded in the holographic master data mask, and the alignment maintained by using the holographic master data mask to replicate holographic storage media. For example, rather than aligning successive data masks, the various data masks to be recorded may be aligned and then recorded into a holographic master data mask by wavelength or angle multiplexing. The correct data mask may be recalled with the appropriate wavelength or angle when it is desired to be imaged and stored. This makes the interchange of data masks very quick and easy during the replication process allowing for fast cycle times. On readout of the media, the alignment of the pages and stacks of pages created by the holographic master data mask may be increased such that readout is improved with minimal time for mechanical alignment and servo in the drive between different pages of a stack. Additionally, careful alignment of layers or between stacks of data page in a layer may be used to detect fake, unauthorized, or pirated storage media. For example, by intentionally varying the alignment or holding a particular alignment between page stacks or between layers in a predetermined way, a signature of a valid storage medium may be generated in the medium itself.

**Figure 5A** illustrates an exemplary system for recording data masks into the master holographic data mask. In this example, holographic master data mask 520 is placed near a quasi Fourier transform plane of data mask 500 to be stored therein. Further, the exemplary system may include a VanderLugt imaging setup to achieve the quasi Fourier transform placement. A polytopic filter may also be included in the exemplary system.

A plane wave illuminates data mask 500, which may include an SLM, lithographic data mask, or other suitable data mask, and stores a portion of holographic master data mask 520. In this instance, the plane wave passes through a lens 530, e.g., a converging lens. A plane wave reference beam is also incident on the holographic master data mask 520 and may be varied, e.g., wavelength or angle, to record multiple data masks in holographic master data mask 520. The system may include a transmission or reflection geometry. An aperture, angle filter, or phase mask may also be incorporated into the system of **Figure 5A**.

Holographic master data mask 520 and/or the imaging system may be moved to spatially multiplex or polytopically multiplex multiple data pages 510 across the media as shown in **Figure 5B.** For example, the system may align one or more masks 500 at a first spatial position to record a stack of data pages 510 in holographic master data mask 520 though one or more multiplexing techniques. The system may then be repositioned to record another stack of data pages 510 and so on to complete holographic master data mask 520. Stored data pages 510 may be imaged to a holographic medium with the same plane wave reference used to record.

Placing holographic master data mask 520 near a quasi Fourier transform plane of data mask 500 may reduce interference between pages in the same stack during recording and when data pages 510 are readout from holographic master data mask 520 and are recorded in a HROM storage medium, for example. This, in turn, may reduce interference between pages of the same stack, referred to as a book, during readout of HROM media recorded using such holographic master data mask 520. More specifically, during readout from holographic master data mask 520, a Fourier filter may be advantageously disposed in the Fourier transform plane of the holographic master data mask 520, close to a surface of an HROM medium or the like to filter out high order transform components. For example, a 4-F system may be used to image into a VanderLugt imaging system with a Fourier filter in the Fourier transform plane of the 4-F system. A 4-F system generally includes two lenses that are separated by the sum of their focal lengths, with two dimensional input and output planes located one focal length in front of the lens pair and one focal length behind the lens pair. Using a 4-F system the Fourier plane may also be placed inside the media.

Another advantage of recording HROM media in or near the Fourier transform plane is increased locational tolerance of the HROM media and detector since the Fourier transform plane is shift invariant. For example, it is possible for the Fourier transform plane to be out of position, e.g., by +/- 100 microns, in any of x, y, z, and still recover an image aligned to a camera which has much smaller pixels, e.g., ∼10 microns. The shift invariance of the Fourier transform plane makes the tolerances on readout much better as in the example above. In addition, because the information in the Fourier transform plane is uniformly distributed, media defects such as scratches and dust are not as severe a problem for data recovery as when in the image plane.

In one example the system includes a phase mask in the object beam and uses phase conjugate readout, where the phase mask may provide a degree of piracy protection. For a good quality reconstruction of the stored information, the phase mask is desirably the same or nearly the same phase mask as used when recording and disposed at the same or nearly the same location in the system. Knowledge of the phase mask and phase mask location allows for protection of the stored information. Further, such protection could be made customer specific, e.g., by recording information for customer X with one phase mask (readable with a specific drive) and customer Y with another phase mask (readable with a different drive). Customer X would not be able to read customer Y's media without a customer Y drive (or knowledge of the particular phase mask and location used in recording).

In another aspect, an exemplary method for recording holographic master data masks includes using confocal multiplexing where each data mask is imaged to a different distance d from the center of the master storage medium. For example, by varying the distance of data mask 500 shown in **Figure 5A** or the image of data mask 500 relative to holographic master data mask 520 between recording different layers. Readout may be confocally detected with a filter similar to methods performed with confocal microscopes. Exemplary descriptions of confocal detection are described in U.S. Patent Nos. 5,202,875, 6,111,828, and 6,272,095, all of which are hereby incorporated by reference in their entirety. Confocal multiplexing techniques may be advantageously combined with volume holographic multiplexing techniques as described above. One potential advantage of holographically implementing multiple layers (image planes) is that the layers do not have to physically be on the storage medium. For example, with current multilevel CD, near-field, or high na systems, the layers are on or inside the media. By imaging or placing the data mask of the data, the layers can appear to a detector or drive as being located outside of the storage medium, inside the medium, or on the medium depending on where the data mask image plane lies during recording. Thus, the usual problem of compensating for spherical aberration due to the change in the amount of substrate that the light travels through may not be necessary and in some instances may be detected without a pickup lens or lenses.

An adjustable lens system as shown in **Figure 3**, and described above, for example, may be used for recording to the holographic master data mask 520 as shown in **Figure 5A**. Further, the holographic master data mask 520 may be readout by a suitable pickup lens that may translate to image different data pages or layers stored at various distances d. Alternatively, the image and detector planes may be moved to record at varying distances. The holographic master data mask 520 may then be used to holographically record multiple layers on HROM media using confocal multiplexing. Similarly, a holographic storage medium, such as an HROM medium, may be recorded and readout with adjustable lens systems at varying distances from the medium.

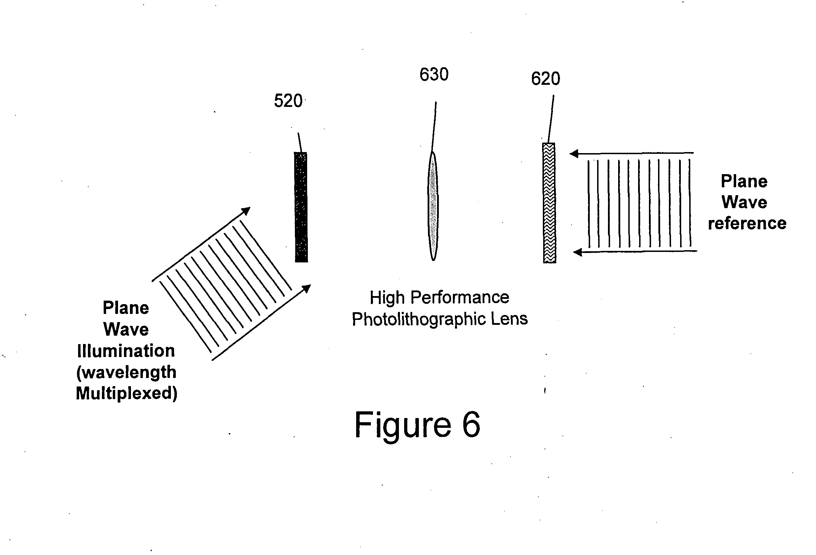

**Figure 6** illustrates an exemplary system for recording with a holographic master data mask 520 to store data in holographic storage medium 620, e.g., HROM storage media. The master holographic master data mask 520 may be imaged directly into the holographic material (where image distance d is a small absolute value), where the multiple masks recorded with multiplexing in the media. As shown in **Figure 6,** the holographic master data mask 520 may be illuminated with a plane wave beam and multiplexed depending on how the data masks where stored therein, e.g., wavelength multiplexed, to image various data masks onto holographic storage medium 620. The holographic master data mask 520 is thus the data source that is recorded in the replicated holographic storage medium 620. The plane wave, encoded by a data mask of holographic master data mask 520, may be imaged, relayed, or propagated to holographic storage medium 620 by lens 630. Lens 630 may include a high performance photolithographic lens. Alternatively, the holographic master data mask 520 may be placed in proximity to the storage medium 620 and recorded without a lens (natural beam propagation). Holographic storage medium 620 is further illuminated with a plane wave reference beam to interfere with the encoded beam and store the data from holographic master data mask 520. It should be recognized that various other systems and configurations are possible and contemplated to record with holographic master data mask 520.

An advantage of a Fourier transform plane in recording the holographic master data mask 520 includes that large pixels can be used and a small hologram may be recorded in the holographic master data mask 520 and then copied into the replicated holographic media 620. Additionally, an advantage of a VanderLugt imaging system is that it can form an image outside the storage medium 620 and with the information layer in the quasi Fourier plane (small) that may be readout with a phase conjugate reference beam or with a standard reference beam. The present VanderLugt system is illustrative only and any system that results in a Fourier Transform or quasi Fourier Transform plane will include similar advantages. A VanderLugt system is desirable in part because if a phase conjugate beam is used for readout, lenses are not required in a drive.

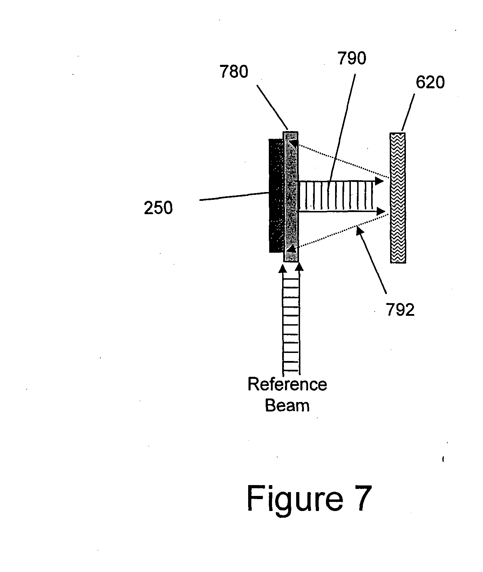

**Figure 7** illustrates a phase conjugate readout of holographic storage medium 620 created with the exemplary system of **Figure 6,** e.g., including a VanderLugt imaging system. A detector 250 may be placed opposing holographic storage medium 620. In this example, a Holographic Optical Element (HOE) grating 780 is placed adjacent detector 250. The reference beam illuminates HOE grating 780 from the side and is directed from HOE grating 780 to the storage medium 620 thereby providing the phase conjugate beam 790. A phase conjugate image 792 is reflected back to detector 250 from storage medium 620 for readout. Use of HOE grating 780 or other similar grating to introduce the readout reference beam into the optical path allows for readout in a relatively compact system.

In other examples, standard beamsplitters, polarizing beamsplitters, waveplates, gratings, and the like at various angles may also be used to introduce the reference beam into the system as will be recognized by those of ordinary skill in the art.

Another exemplary method for recording holographic storage media that may be readout without the use of a lens includes storing multiple image planes or layers at a distance from the holographic storage medium located outside of the storage medium as described above with reference to **Figure 3**. A detector may be advantageously placed at the distance the image was stored and detect a portion or the entire stored image, e.g., an entire data page or more in parallel. In one example, each storage layer of a holographic storage medium is imaged to the same distance 'd' from the data mask as shown in **Figure 3**. In an example where the holographic storage medium includes a holographic master data mask, each level of a holographic storage medium recorded with the holographic master data mask, e.g., an HROM, may be recorded such that the holographic master data mask is imaged to the same distance d from the HROM.

The exemplary method does not require a lens during readout of the holographic image from the storage medium. Specifically, a detector may be placed at distance d from the holographic storage medium, and an image may be readout directly to the detector without the need for a lens. A further advantage includes that an entire page of data can be readout to a detector in parallel. By imaging off the media on or before the image plane, the normal holographic reconstruction is then naturally imaged without the need for a lens. For example, if an image plane of the system is before the media and no lenses are disposed there between, a phase conjugate wave may be used to generate an image without a lens at that image plane for readout. If the drive has a detector at that image plane the pages in that stack can then be detected and the information in that stack of pages readout. Other stacks are addressed by moving the camera relative to the media to the other stacks that were recorded on to the media during replication. In other examples, the use of a phase conjugate wave may be used for readout with a lens or optical imaging elements.

Another exemplary recording method for holographic storage media such as HROM media or holographic master data masks includes polytopic multiplexing. Polytopic multiplexing, described in the above referenced U.S. Patent Application 60/453,529, which is incorporated by reference herein, is an exemplary method to increase the layer density by making the individual data page stacks smaller spatially. Polytopic multiplexing may be used in conjunction with wavelength, angle, fractal, or other holographic multiplexing techniques. Polytopic multiplexing methods allow holograms to be spatially multiplexed onto a holographic material with partial spatial overlap between neighboring holograms and/or stacks of holograms. Each individual stack of data pages may additionally take advantage of an alternate multiplexing scheme such as angle, wavelength, phase code, peristrophic, or fractal multiplexing. Generally, the holograms are separated by an amount equal to the beam waist of the data beam writing the hologram. Unlike more traditional approaches, however, the beam waist is intentionally placed outside of the holographic media such that there is significant beam overlap between stacks inside the media. Upon reconstruction, the data pages and its neighboring data pages will all be readout simultaneously, however, an aperture (filter) placed at the beam waist of the reconstructed data filters out the neighbors that are readout such that only the desired data is detected. Polytopic multiplexing may be implemented with the beam waist inside of the media with the aperture(s) placed at another Fourier plane or by using an angle filter that filters out the neighboring data page reconstructions.

The holograms can be multiplexed by combinations of the standard multiplexing techniques as well as by polytopic multiplexing. Significant increases in storage density may be achieved particularly for thick media and high numerical aperture optical systems where spot sizes are relatively small. Previous techniques were limited in their ability to spatially separate stacks of holograms due to significant amounts of beam divergence. High numerical aperture optics, despite the small beam waist, expand very quickly. The spatial separation of stacks in the prior art was generally limited by the size of the beam in the media after expansion and not limited by the spot size. Up to this point, there has generally been a tradeoff between media thickness (and therefore dynamic range) and the lens numerical aperture. Therefore, there is saturation in achievable capacity that can be obtained for any holographic storage system using the approaches given by the prior art. The polytopic methods described here allow a system to fully utilize high numerical aperture lenses and independently choose the media thickness and therefore gain in both bit density and media dynamic range.

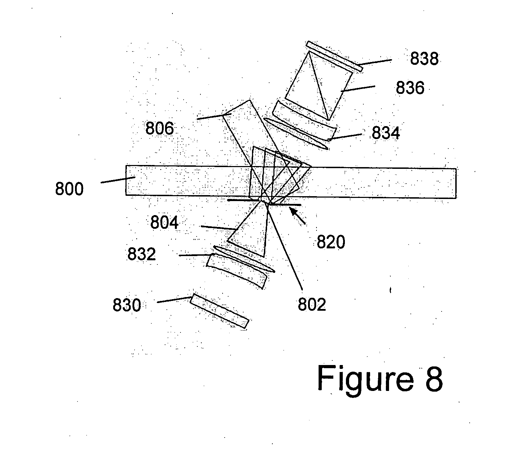

**Figure 8** illustrates an exemplary readout system using a phase conjugate reference beam that may filter or block unwanted reconstructions. As shown in **Figure 8**, a block 820 at the beam waist 802 will block out the unwanted reconstructions as reference beam 806 is incident on holographic storage medium 800. **Figure 8** shows a Fourier transform arrangement, including a detector 830, Fourier transform lenses 832, 834, a beam splitter 836, and SLM 838. It should be recognized, however, that this system could be used with an imaging system as well.

In this example the full multiplexing (angle, wavelength, etc) of the stack can be used and the stacks can be placed a minimal distance from each other that is not determined by the thickness of the medium 800. This allows for increased use of thick films (>100 microns) and is particularly useful for films greater than 400 microns to many millimeters.

In addition, the stacks do not have to be recorded fully at one time. For material reasons it may be desirable to partially fill the neighboring stacks and then come back and completely fill a stack as the neighborhood of the stack is recorded. See, e.g., U.S. Patent Application No. 09/588,908, "Process for Holography Involving Skip-Sorted Hologram Storage," which is hereby incorporated by reference as if fully set forth herein.

The exemplary method may also be used with high numerical aperture lenses or holographic optical elements that function as lenses. The holograms can be recorded in a reflection or transmission holography geometry process. It should be further recognized by those of ordinary skill in the art that the exemplary system and polytopic methods may be employed without a phase conjugate reference beam.

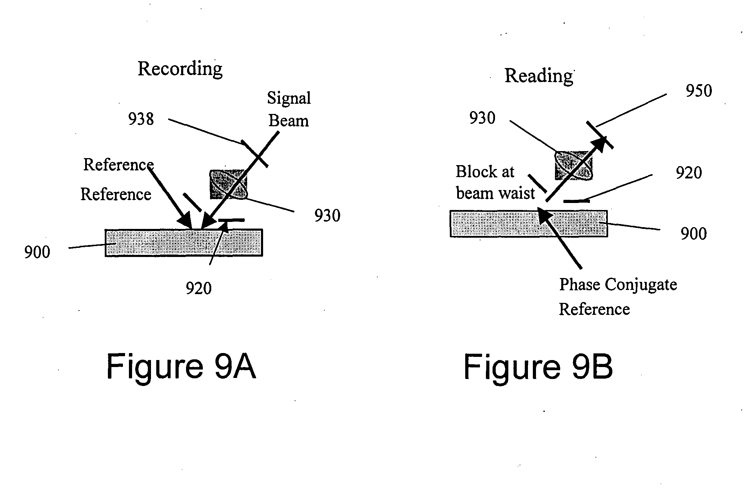

**Figures 9A and 9B** illustrate another exemplary recording and reading method. In this example, polytopic multiplexing is used with phase conjugate readout beam to enhance high order filtering, where the data encoded signal beam is focused in front of the medium 900 as opposed to behind the medium 900 as previously discussed. The focus location is where the beam block 920 is now placed. This has the additional benefit of blocking unwanted higher orders diffracting from a SLM or data mask. The beam then propagates into the media and is holographically recorded with the reference beam as shown in **Figure 9A.** Multiplexed holograms may then be recorded at one location by a Bragg multiplexing method (angle, wavelength, etc). Media 900 is moved by an amount given by the dimension of the beam waist and then another stack may be recorded. Upon readout, the phase conjugate readout is used as the input reference beam and this reconstructs a backwards-propagating signal beam that retraces the path of the original recording to detector 950. The block 920 separates out the unwanted reconstructions from the desired signal beam.

The exemplary methods may be implemented with Fourier plane or image plane filtering or near the planes. It may also be implemented with a single lens, two or more lens, or with a VanderLugt imaging system that has no lens when reading out. This may also be relayed with a quasi Fourier plane filter in the relay and the Fourier plane of the hologram plane near or in the storage media.

The above detailed description is provided to illustrate exemplary embodiments and is not intended to be limiting. It will be apparent to those of ordinary skill in the art that numerous modification and variations within the scope of the present invention are possible. For example, various methods of recording in holographic media and reading from holographic media may be used in holographic storage systems in isolation or in combination with other methods. Additionally, the apparatus and methods described herein should not be limited to any particular holographic storage system, for example, the methods and systems are generally applicable with various system configurations and multiplexing methods. Accordingly, the present invention is defined by the appended claims and should not be limited by the description herein.

## Claims

1. A method for recording holographic storage media, comprising:
illuminating a data mask with a beam and recording a resulting modulated beam in a holographic storage medium, wherein the data mask includes an information layer that is divided into multiple data pages; and
propagating a reference beam to the holographic storage medium to record the multiple data pages of the data mask in parallel in the holographic storage medium.

2. The method of claim 1, wherein the data mask is a holographically recorded data mask and includes one or more multiplexed layers of multiple data pages.

3. The method of claim 1, wherein the information layer is propagated to a plane located outside of the holographic storage medium.

4. The method of claim 1, wherein the information layer is propagated to the holographic storage medium with a VanderLugt imaging system.

5. The method of claim 1, further including positioning the holographic storage medium near a Fourier transform plane of the data mask.

6. The method of claim 1, further including positioning the holographic storage medium near an image plane of the data mask.

7. The method of claim 1, wherein the data mask is propagated to the holographic storage medium without a lens.

8. The method of claim 1, wherein the object beam is confocally multiplexed to record multiple data masks.

9. The method of claim 1, wherein the data mask includes at least one of a lithographic data mask and a spatial light modulator adapted to image the information layer.

10. The method of claim 1, wherein the holographic storage medium includes at least one of a polytopic and angle filter.

11. The method of claim 1, wherein a plurality of information layers are multiplexed onto the holographic storage medium using at least one multiplexing technique.

12. The method of claim 11, wherein successive information layers having multiple data pages are aligned to defme multiple stacks of data pages.

13. The method of claim 11, wherein successive information layers having multiple data pages are aligned in a preselected arrangement such that authenticity of the medium may be determined.

14. The method of claim 11, wherein the information layers are both polytopic and wavelength multiplexed.

15. The method of claim 1, wherein the holographic storage medium includes holographic read only memory.

16. A holographic storage medium recorded by any of the methods of claims 1-15.

17. A holographic data storage system, comprising:
a light source; and
a data mask having an information layer adapted to be relayed and recorded into a holographic storage medium, wherein the information layer is grouped into a plurality of data pages.

18. The system of claim 17, wherein the data mask includes at least one of a lithographic mask a spatial light modulator.

19. The system of claim 17, wherein the data mask includes a holographic storage material with at least one multiplexed layer of information recorded therein.

20. The system of claim 17, further including a VanderLugt imaging system.

21. The system of claim 17, wherein the holographic storage medium is positioned near the Fourier transform plane of the information layer.

22. The system of claim 17, wherein the holographic storage medium is positioned near the Fourier transform plane of the data mask.

23. The system of claim 17, further including a filter at the Fourier transform plane of the data mask.

24. The system of claim 17, further including a repositioning mechanism adapted to move at least one of the data mask, the holographic storage medium, and an optical element.

25. The system of claim 17, further including an optical element for each data page of the data mask..

26. The system of claim 17, further including a 4-F optical system.

27. The system of claim 17, further including substantially telecentric optical elements.

28. A method for reading information stored in a holographic storage medium, comprising:
illuminating a holographic storage medium with a reference beam;
aligning a detector with a single data page stored in the holographic storage medium at a first location, wherein the holographic storage medium includes at least one information layer divided into a plurality of data pages stored therein and adapted to be detected at a distance of the detector;
detecting information from the data page at the first location; and
multiplexing the holographic storage medium to readout additional data pages from different layers at the first location.

29. The method of claim 28, further including aligning the detector with a second stack of data pages centered at a second location to detect data pages of the second stack.

30. The method of claim 28, wherein detecting information at the first location further includes detecting a line of a data page at a time and scanning the line detector across the data page.

31. The method of claim 28, wherein the detector oversamples the stored information.

32. The method of claim 28, wherein a holographic optical element is placed adjacent the detector.

33. The method of claim 28, wherein the act of multiplexing includes at least one of wavelength, polytopic, angle, correlation, shift, and spatial multiplexing.

34. The method of claim 33, wherein the wavelengths are varied for wavelength multiplexing with a tunable source including an electroabsorptive modulated laser.

35. The method of claim 34, wherein the wavelengths are varied for wavelength multiplexing with a tunable source that includes a MEMs structure on a laser cavity.

36. The method of claim 28, wherein a readout light source includes a laser that is pulsed.

37. The method of claim 28, wherein detecting information includes a phase conjugate beam and a phase conjugate readout system.

38. The method of claim 37, wherein the phase conjugate readout system includes a phase mask.

39. A system for reading information stored in holographic storage media, comprising:
a light source; and
a detector, wherein the detector is adapted to detect multiple data pages stored in a holographic storage medium in a page-wise fashion.

40. The system of claim 39, wherein the detector includes an array of sensor elements.

41. The system of claim 39, wherein the detector includes a line scanner.

42. The system of claim 39, further including a repositioning mechanism to move the detector relative to the holographic storage medium.

43. The system of claim 39, further including a repositioning mechanism adapted to move at least one of the detector, the holographic storage medium, and an optical element.

44. The system of claim 39, further including a holographic optical element.

45. The system of claim 39, further includes a holographic optical element disposed adjacent the detector.

46. The system of claim 39, wherein the detector detects the data pages without an optical lens.

47. The system of claim 39, wherein the light source includes a laser.

48. The system of claim 47, wherein the laser is configured to be pulsed.

49. The system of claim 39, wherein a wavelength of the laser may be varied.

50. The system of claim 39, wherein the light source includes a tunable source having an electroabsorptive modulated laser.

51. The system of claim 39, wherein the light source includes a tunable source having a MEMs structure on a laser cavity.

52. The system of claim 39, further including a phase mask.

53. The system of claim 39, further including a filter adapted to block out unwanted reconstructions.

54. The system of claim 39, further including a polytopic filter.

55. The system of claim 39, further including a filter disposed between the detector and the holographic storage medium.

56. The system of claim 55, wherein the filter includes an array of pinholes.
